# EUROPEAN PATENT APPLICATION

(11) **EP 1 416 743 A1**
(43) Date of publication of application: **06.05.2004**
(21) Application number: 02425664.6
(22) Date of filing: 31.10.2002
(51) Int. Cl.: H04Q 3/00, H04Q 7/30

(54) **Common channel signalling routing method based on the MTP3 service indicator octet (SIO) code**

(71) Applicant: Siemens Mobile Communications S.p.A., 20126 Milano (IT)
(72) Inventor: Faggioni, Lorenzo, 20096 Limito di Pioltello (IT); Fumagalli, Sergio, 20069 Vaprio D'Adda (IT)

(57) **Abstract**

UMTS's protocol signalling messages are routed between signalling points associated to the various network elements of the mobile radio network. Each message includes an originating point code field (OPC A) for indicating the originating signalling point, a destination point code field (DPC B) for indicating the destination signalling point, and a service information code field (SIO) for distributing the message to an addressed user part, such as: ATM Adaptation Layer AAL2 / AAL3 (disclosed in the relevant 3GPP Technical Specifications), or Signalling Connection Control Part SCCP (disclosed in the relevant ITU-T standards), or other known parts. Signalling protocols of two Application Parts only are considered: the Radio Access Network Application Part (RANAP), and the Access Link Control Application Part (ALCAP). An originating signalling point is associated to a radio network controller (RNC) and a destination signalling point is associated to the MSC. The radio network controller (RNC) originates both RANAP and ALCAP messages and put them on a Link set directed to the Core Network. The RANAP and ALCAP messages have a common destination point code field (DPC B) indicating MSC, and different service information code, namely: SCCP for RANAP, and ATM Adaptation Layer AAL2 / 3 for ALCAP. A media gateway (MGW) placed before the MSC receives both the RANAP and ALCAP messages and, on the basis of the service indicator code, routes RANAP to the MSC and ALCAP to the media gateway (MGW) (fig.8).

## Description

### FIELD OF THE INVENTION

The present invention is referred to the field of the Public Land Mobile Networks (PLMN) and more precisely to a common channel signalling routing method based on the MTP3 Service Indicator Octet (SIO) code.

### BACKGROUND ART

Up till now the only GSM (Global System for Mobile communications) system is really operating in Europe, but some prototypes of the Universal Mobile Telecommunications System (UMTS) are being intensively tested in the various countries to be made operative between short-term. The 3rd Generation Partnership Project (3GPP) in the ambit of the ITU-T (International Telecommunication Union) has issued a complete set of Technical Specifications (TS) for the standardisation of the UMTS network. The new network shares the existing GSM Core Network with the GPRS (General Packet Radio Service) service.

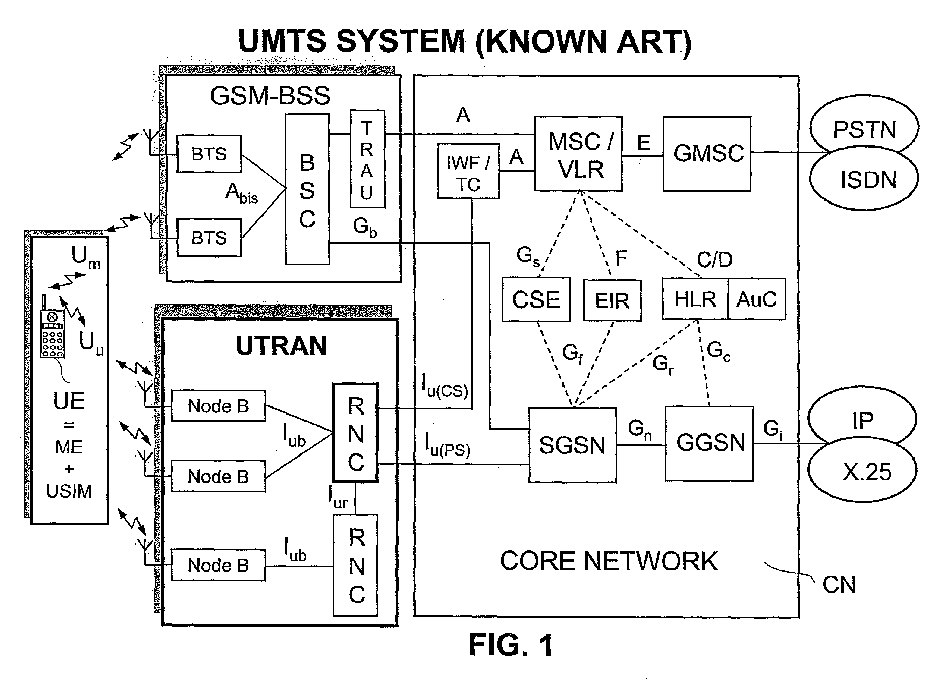

**Fig.1** shows the incoming UMTS system constituted of a Core Network CN connected to an UTRAN (Universal Terrestrial Radio Access Network) part and to a GSM - BSS (Base Station Subsystem). Both the UTRAN and BSS are connected, on air, to a plurality of User Equipment UE, each including a Mobile Equipment ME with a respective USIM card (UMTS Subscriber Identity Module). Without limitation, an UE can be either of the single or multistandard type. The UMTS system of fig.1 is described in the TS 23.002 (CN) and TS 25.401 (UTRAN). The UTRAN includes a plurality of Node B blocks each connected to a respective Radio Network Controller RNC by means of an I_{ub} interface. A node B includes a Base Transceiver Station (BTS) connected to the UEs through an on-air Uu interface. The upper RNC is a Serving S-RNC connected to the Core Network CN by means of a first Iu(CS) interface for Circuits Switched and a second Iu(PS) interface for Packet Switched of the GPRS. The RNC placed below can be a Drift D-RNC and is connected to the upper S-RNC by means of an Iur interface. Both UTRAN and S-RNC blocks are highlighted because particularly concerned with the present invention. The UTRAN with the served UEs constitute a Radio Network Subsystem (RNS) disclosed in TS 23.110.

The GSM - BSS block includes a plurality of BTSs connected to a Base Station Controller BSC by means of an Abis Interface and to the UEs through an on-air Um interface. The BSC is interfaced to the Core Network CN by means of a Gb interface (packet switched) and is further connected to a Transcoder and Rate Adaptor Unit TRAU also connected to the Core Network CN through an A interface. The GSM-BSS is described in the relevant Technical Reports (TR) produced by the Special Mobile Group (SMG) of the European Telecommunications Standards Institute (ETSI).

The CN network includes the following Network Elements: Switching Centre MSC / Visitor Location Register VLR, Gateway MSC GMSC, Interworking Function IWF / Transcoder TC, Camel Service Environment CSE, Equipment Identity Register EIR, Home Location Register HLR, Authentication Centre AuC, Serving GPRS Support Node SGSN, and Gateway GPRS Support Node GGSN. The following interfaces are visible inside the CN block: A, E, Gs, F, C, D, Gf, Gr, Gc, Gn, and Gi. The IWF block translates the Iu(CS) interface into the A interface towards MSC / VLR block. The TC element performs the transcoding function for speech compression/expansion concerning UTRAN (differently from GSM where this function is performed outside the CN network) also connected to the MSC block through the A interface. The GMSC is connected to the MSC / VLR through the E interface and to a Public Switched Telephone Network PSTN and an Integrated Services Digital Network ISDN. Blocks CSE, EIR, HLR, AUC are connected to the MSC / VLR through, in order, the Gs, F, C, and D interfaces, and to the SGSN node through the Gf and Gr interfaces. The SGSN block is interfaced at one side to the S-RNC inside UTRAN block by means of the Iu(PS) interface, and to the BSC inside the GSM-BSS block through the Gb interface. At the other side the SGSN node is interfaced to the GGSN node through the Gn interface. The last block is connected through the Gi interface to a packet data switching network of the IP (Internet Protocol) type and/or the X.25 type. The Core Network CN of fig.1 consists of an enhanced GSM Phase 2+, as described in TS 23.101, with a Circuit Switched CS part and a packet Switched part (GPRS). Another important Phase 2+ is the CAMEL (Customised Application for Mobile network Enhanced Logic) Application Part (CAP) used between the MSC and CSE for Intelligent Network (IN) applications. CAP is described in TS 29.078.

In operation, the MSC, so as the SGSN node, keep records of the individual locations of the mobiles and performs the safety and access control functions. More than one BSS and RNS block are connected to the CN Network, which is able to perform intrasystem handovers between adjacent RNSs or between adjacent BSSs, and intersystem handovers between a RNS and an adjacent BSS. Without limitation, the following description will be prevalently oriented to the UTRAN context. The RNC has many different tasks in the RNS, for example, is responsible for the Radio Resource Management and the Operation and Maintenance (O&M functionality) of itself and the connected Node Bs. Logically, the RNC can be split up into the aforementioned three types according to its current functionality.

The network of **fig.1,** which only represents a minimal part of a world-wide network, shall allow the routing of a telephone call inside an International UMTS / GSM Service Area subdivided into National Service Areas. By way of the hierarchical structure of the UMTS network, each National Service Area is subdivided into the following nested domains of decreasing area: PLMN Service Area; MSC / SGSN Service Area; Location Area LA (CS-domain) uniquely defined by its LAI (Location Area Identity) code; Routing Area RA inside the SGSN Service Area as a subset of the CS Location Area; Cell Area where the UE is actually located in the radio coverage of a target NodeB.

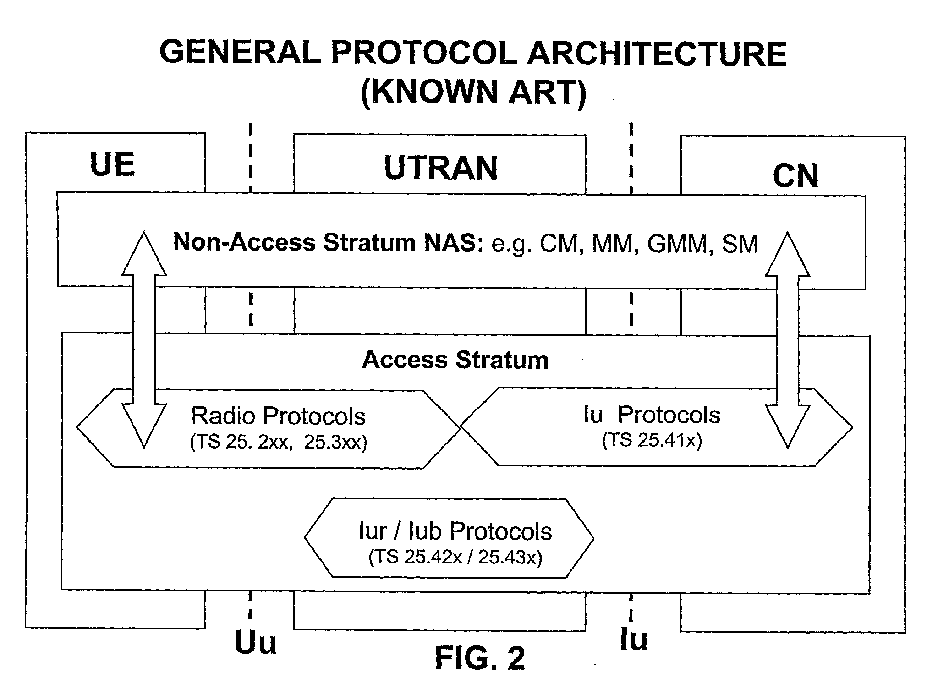

**Fig.2** shows diagrammatically the general protocol architecture of the signalling used in the UMTS network. For this aim the network is subdivided into the UE, UTRAN and CN parts delimited by the Uu and Iu interfaces (but also Iur and Iub). An Access Stratum with a superimposed Non-Access Stratum NAS are lie down on the depicted architecture. The Access Stratum includes the Iur / Iub protocols defined in TS 25.42x / TS 25.43x, the Iu protocols defined in TS 25.41x, and the Radio protocols defined in TS 25.2xx and 25.3xx. User data and control information are exchanged between the CN and the UEs using the Radio protocols and the Iu protocols of the Access Stratum. These protocols contain mechanisms for transfer NAS message transparently, i.e. the so-called Direct Transfer DT procedures. The NAS stratum includes higher levels protocols to handle control aspects, such as: Connection Management CM, Mobility Management MM, GPRS Mobility Management GMM, Session Management SM, Short Message Service SMS, etc.

The different protocols governing the various interfaces of the UMTS network of fig.1 are largely based on the Open System Interconnection (OSI) Reference Model for CCITT (Comité Consultatif International Télégraphique et Téléphonique) Applications (Rec. X.200). The OSI model is partitioned into seven layers. From the point of view of a particular layer, the adjacent lower layer provides a "transfer service" with specific features. The way in which the lower layer is realised is immaterial to the next higher layer. Correspondingly, the lower layer is not concerned with the meaning of the information coming from the higher layer or the reason for its transfer.

Historically the problem of designing a well reliable signalling system has been posed in the PSTNs domain. For this aim a CCITT Signalling System N° 7 has been developed to provide an internationally standardised general purpose Common Channel Signalling (CCS) system. CCS is a signalling method in which a single channel conveys, by means of labelled messages, signalling information relating to, for example, a multiplicity of circuits, or other information such as that used for network management. Common Channel Signalling can be regarded as a form of data communication that is specialised for various types of signalling and information transfer between processors in telecommunications networks. The signalling system uses signalling links for transfer of signalling messages between exchanges or other nodes in the telecommunication network served by the system. Relevant SS7 standards are published, and regularly updated, as ITU-T Q.7xx Recommendations.

The initial specification of SS7 was based on circuit-related control requirements. To meet these requirements, SS7 was specifies in four functional levels, the Message Transfer Part (MTP) comprising levels 1-3, and the User Parts as level 4. The term "User" in this context refers to any functional entity that utilises the transport capability provided by the MTP. Provisions for connectionless protocols have been added successively to the original SS7. Level 1 of MTP defines the physical, electrical and functional characteristics of a signalling data link and the means to access it. Level 2 of MTP defines the functions and procedures for and relating to the transfer of signalling messages over one individual signalling data link. Level 3 of MTP defines the network functions. Level 4 consists of the different User Parts. The following entities are defined as User Parts in SS7. Signalling Connection Control Part (SCCP) adds up functions to the MTP to provide connection-oriented and connectionless network services to transfer circuit-related and non-circuit-related information, respectively. Telephone User Part (TUP), defines the international telephone call control signalling functions for use over SS7. Data User Part (DUP), defines the protocol to control interchange circuits used on data calls, and data call facility registration and cancellation. ISDN User Part (ISUP), encompass signalling functions required to provide switched services and user facilities for voice and non-voice application in the ISDN. Transaction Capabilities (TC), provides the means to establish non-circuit related communication between two nodes in the signalling network. The SCCP also has Users,. These are: ISUP, TC and Operation, Maintenance and Administration Part (OMAP). The various components and functions are disclosed in the following Recommendations: MTP: Q.701-Q704, Q.706, Q.707; TUP: Q.721-Q.725; DUP: Q.741; ISUP: Q.761-Q.764, Q.766; SCCP: Q.711-Q.714, Q.716; TC: Q.771-Q.775; OMAP: Q.750-Q.755; and Supplementary services: Q.73x Series.

SS7 signalling as been gradually enriched with new functions suitable for the incoming digital PLMNs, the Intelligent Networks, and the Packet Switch service. To support PLMNs a Mobile Application Part (MAP) has been developed by ETSI. MAP (TS 29.002) is the most important Level 4 Application Part, because regulates the mobility aspects of the users. Typical MAP functions are, e.g.: updating and clearance of VLR location information, storing of routing information in the HLR register, delivery & updating of user profiles in the HLR and VLR, IMEI (International Mobile Equipment Identity) check, Inter-MSC handover, etc. The already mentioned CAMEL Application Part (CAP) have been developed to support typical functions of an Intelligent Network. Both Packet Switch and CAP are not in the scope of the invention and their protocols will not be discussed in the following. Evolution of the SS7 architecture since the Red book (1984) increasingly has been based on the 7-layers OSI reference model, which considers primarily connection-oriented protocols, that is, protocols that establish a logical connection before transferring data. There are not an effective correspondence between SS7 Level and OSI layers, nevertheless in the following the terms Level and Layer are considered synonym. The present invention mainly impacts MTP3 (MTP-Level 3) signalling messages at the two ends of the Iu(CS) interface, therefore S-RNC and Media Gateway MGW are the mostly involved elements.

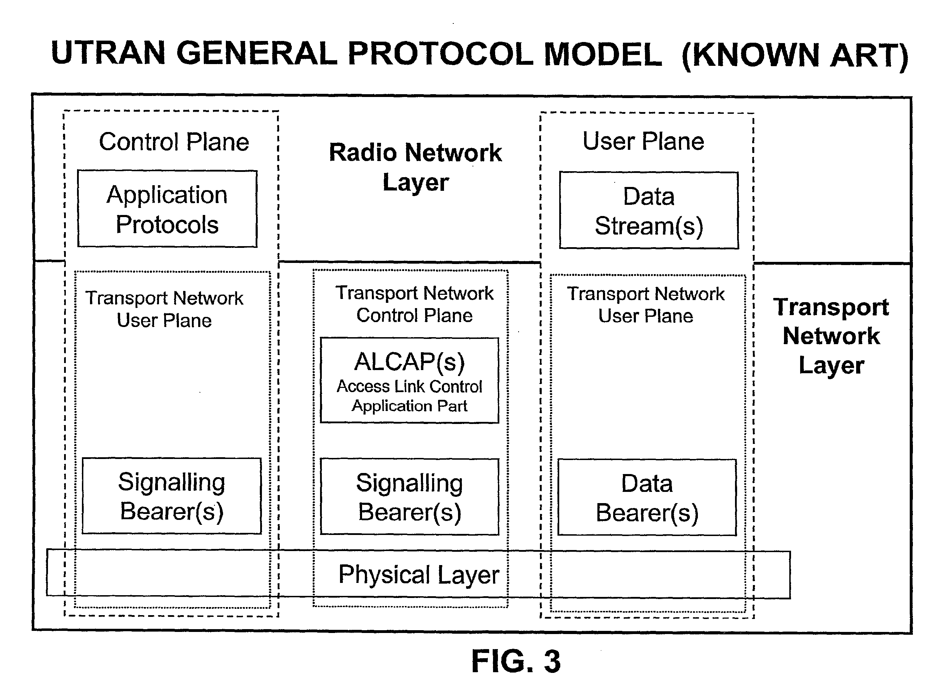

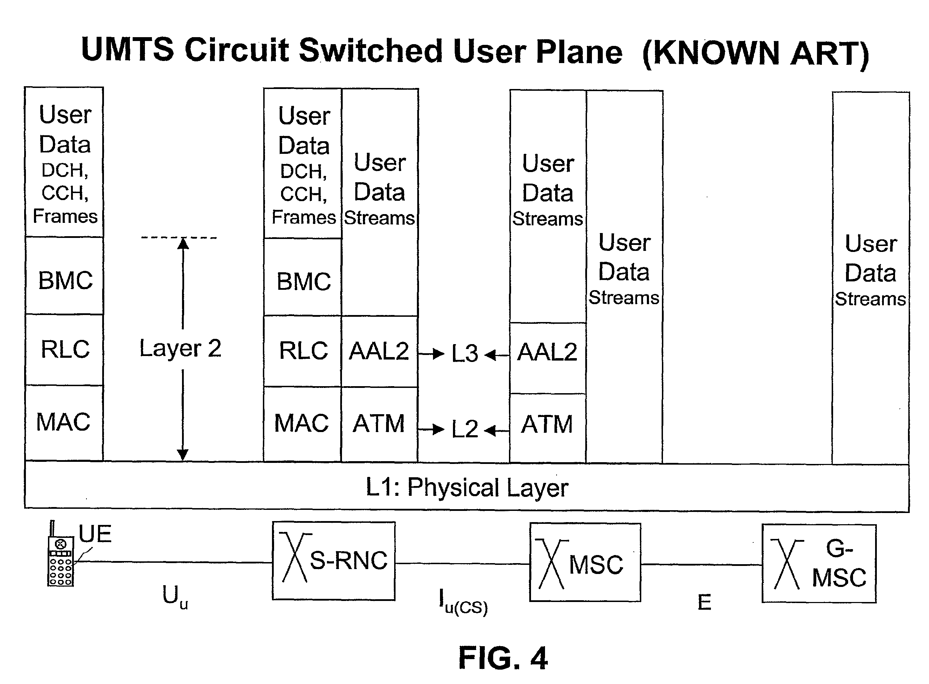

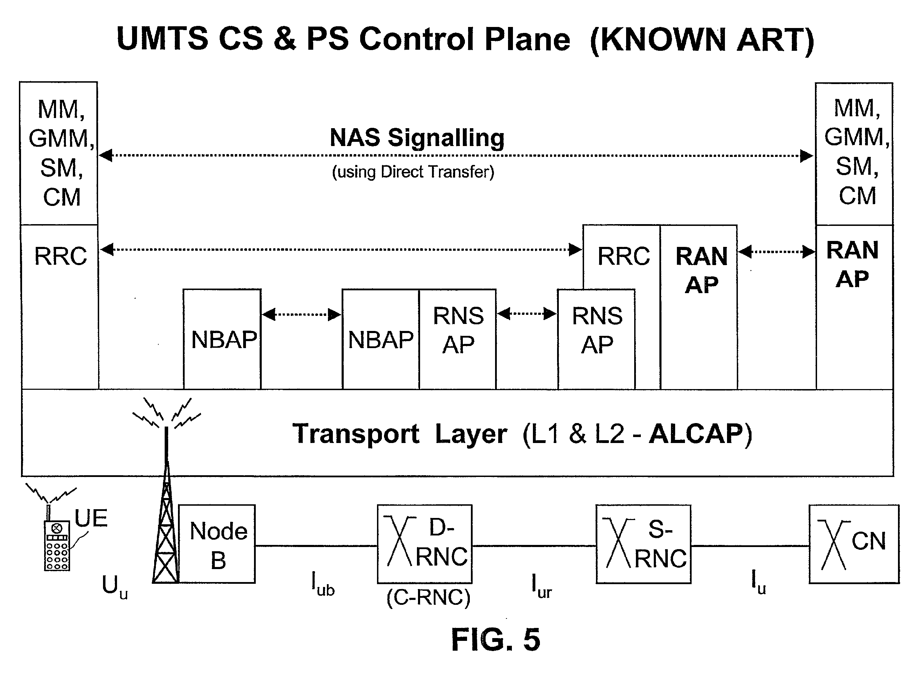

**Fig.3** shows a general protocol model of the UTRAN interface highlighting a subdivision into an User Plane and a Control Plane including the teaching of the preceding fig.2. This subdivision is quite general and is also referable to the other interfaces. The protocol structure is designed in horizontal layers and vertical planes. Layers and Planes are taken as logically independent of each other to allow future changes, if necessary, of the only involved parts. Two main horizontal layers are present: an upper Radio Network Layer and a lower Transport Network Layer , in the latter is visible the Physical Layer corresponding to the Level 1. Three vertical planes are present, respectively: a Control Plane, an User Plane, and a Transport Network Control Plane. The User Plane includes the Data Stream(s) and the data Bearer(s) for the Data Stream(s). Each data stream is characterised by one or more frame protocols specified for that interfaces. The User Plane is used to transport all user data, e.g.: speech data or packet data. The Control Plane is used for all control signalling which is UMTS-specific in the considered case. It includes (depending on the relevant interface) several Application Protocols, i.e. RANAP (Radio Access Network Application Part described in the TS 25.413; RNSAP (Radio Network Subsystem Application Part) described in the TS 25.423; and NBAP (Node B Application Part) described in the TS 25.433; the Control Plane also includes the Signalling Bearer(s) for transporting the Application Protocols messages. The Transport Network Control Plane is used for all control signalling within the Transport Network Layer; it does not contain any Radio Network Layer information. The central aspect of the Transport Network Control Plane is the ALCAP concept (Access Link Control Application Part) described in the TS 25.410, TS 25.420 & TS 45.430. The ALCAP is a set of protocols ( ITU Q2630.1 and Q2150.1) used to set up the Data Bearer(s) for the User Plane. The Transport Network Control Plane acts as plane between the Control Plane and the User Plane. It enables the Application Protocols in the Control Plane to be total independent of the technology selected for data bearer in the User Plane. The Layer 1 of the Iu, Iur and Iub interfaces is defined identically in the TS 25.411, TS 25.421 and TS 25.431. Main L1 functions are those to interface to the physical medium (e.g.: optical fiber, radio link, copper cable) to offer the clock extraction capability and transmission quality control. The physical medium shall comply with some well known standards, i.e. SDH, SONET, Ex, Tx, etc. In the UMTS network of fig.1 ATM (Asynchronous Transfer Mode) is used on Layer 2 of the whole Transport Network Layer; to say, for all 3 Planes of the Iu (TS 25.412), Iur (TS 25.422) and Iub (TS 25.432) interfaces. The ATM mode enables the transmission of Real Time (RT) data, such as speech & video, as well as of Non-Real Time (NRT) data, such as packet data, computer files, graphics. According to the ATM concept, all data streams with different bit-rates will be converted into small data packets, the so-called ATM cells, all of the same length of 53 bytes. The first 5 consecutive bytes of each ATM cell constituting an Header for conveying the cell control information, the remaining 48 bytes being used for the Payload. Asynchronous transmission mode is meaning that in a stream of continuously transmitted ATM cells the temporary distances between consecutive useful cells are different. Several ATM Adaptation Layer (AALx) functions are provided at Level 3. The AAL is functional divided into two sub-layers: the Convergence Sub-layer (CS) and the Segmentation And Re-assembly (SAR) sub-layer. The CS is responsible for adaptation of the ATM to upper layer and the recognition of the data type and synchronisation. The SAR is responsible for segmentation of the data flow into the 48 bytes ATM payload parts and the re-assembly of the ATM payload to the original data flow. To support different types of data transmission, different AAL types have been defined: AAL 1, 2, 3 / 4, 5. For the aim of the present invention the only AAL2, and AAL5 are considered. AAL2 is used for synchronous mode (i.e. RT data), connection-oriented data transmission with a variable bit rate (Variable Bit Rate VBR services). Typical applications are video or audio transmissions. AAL5 is used for asynchronous mode (i.e. NRT data), connection-oriented data transmission with a variable bit rate. Typical applications are Local Area Network (LAN) emulation or connection of LANs via ATM networks. Further details on the Utran's Control Plane protocols and User Plane protocols will be given in the description of the following Figures 4 and 5 which summarise the main UMTS protocols.

**Fig.4** shows the main protocol stacks of the CS User Plane referred to the UMTS network of fig.1. At the bottom of the Figure the following elements: UE, S-RNC, MSC, and G-MSC and the respective interfaces Uu, Iu(CS), and E are depicted. The lower part of the User Plane includes the Physical Layer L1 which is differently defined at the various interfaces. The protocol stack used at the Uu interface (both in the UE and S-RNC) includes the following down-top protocols: MAC (Medium Access Control); RLC (Radio Link Control); BMC (Broadcast / Multicast Control), and User Data DCH (Dedicated CHannel), CCH (Common CHannel) Frames. The protocol stack used at the Iu(CS) interface (both in the S-RNC and MSC) includes: ATM, AAL2, and User Data Streams. At the E interface between MSC and G-MSC the only User Data Streams are indicated. MAC, RLC and BMC belong to as many sub-layers of the Layer 2 (data link layer). As known, the process of transmitting user data from a first interface and read them to a second interface implies: a) to go down the initial protocol stack until the point of activation of a peer-to-peer protocol that converts the initial format into the format of the other interface; b) transmitting the reformatted data on the link of the second interface; c) receiving data at the second interface and go up the new protocol stack until the top is reached where the addressed application resides, or repeat the previous steps towards another interface until termination. With reference to the **fig.4** the various layers are examined.

Layer 1 (Physical) of the Um interface is described in the TS 25.2xx series. UTRA FDD (Frequency Division Duplexing) and TDD (Time Division Duplexing) modes could be used for physical transmission. The Physical layer offers information transfer to MAC and higher sub-layers via Transport Channels mapped on Physical Channels characterised by frequency and code in the UTRAN FDD mode, and by frequency, code, and timeslot in the UTRAN TDD mode. Main Transport Channels are: Random Access Channel (RACH), Forward Access Channel (FACH), Broadcast Channel (BCH), Paging Channel (PCH), Dedicated Cannel (DCH). Other important Layer 1 functions are: Encoding / De-coding, Interleaving / De-interleaving, Forward Error Correction (FEC), Rate matching, Spreading / De-spreading, QPSK Modulation / De-modulation, RF processing, Closed Loop Power Control, Error Detection, Measurement of power and quality parameters of the reception signal, etc.

The MAC protocol is described in TS 25.321. It is responsible for e.g.: mapping of Logical Channel to Transport Channel and vice versa; switching between Common and Dedicated Transport Channel on RRC (Radio Resource Control) decision; selection of Transport Format for each Transport Channel; ciphering of RT data; UE identification on Common Transport Channels, etc.

The RLC protocol is described in TS 25.322. It is responsible for e.g.: Segmentation / Re-Assembly the higher layer PDUs (Protocol Data Unit) into/from smaller RLC Payload Units (PU); transfer of user data in Acknowledged / Unacknowledged mode; Flow Control to provide different Quality of Service (QoS) levels; Backward Error Correction (BEC) for NRT data; Ciphering for RT data, etc.

The BMC protocol is described in TS 25.324. It is responsible for e.g.: providing broadcast or multicast transmission service on the radio interface for common user data in transparent or unacknowledged mode; storage and scheduling of BMC messages such as SMS messages for transmission to the UEs.

Layer 1 on the Iub, Iur, Iu(CS) interfaces has been already mentioned when discussing the fig.3. The Radio Network Layer of the Iub and Iur User Plane (not visible in fig.4) uses Frame Protocol (FP) for Dedicated Channel DCH, and Common Transport Channels CCH for the transmission of the user data streams. They are set up directly on AAL2 for adaptation to ATM. The Iu(CS) User Plane protocol is residing directly on top of AAL2 for adaptation to ATM. Concerning the E interface the user data are transferred via classical GSM CN on top of Layer 1, as defined by E1/T1 User Data streams for PCM30/24 channels.

**Fig.5** shows the main protocol stacks of the CS and PS Control Plane referred to the UMTS network of fig.1. At the bottom of the Figure the following elements: UE, Node B, D-RNC, S-RNC, CN and the respective interfaces Uu, Iub, Iur, Iu [Iu(CS), Iu(PS)] are depicted. The bottom part of the Control Plane includes the Transport Layer upon which the Radio Protocols and the protocols of the Non Access Stratum reside. The Transport Layer includes the elements of the Transport Network Layer of fig.3, to say, the L1 and L2 layers and the ALCAP (Access Link Control Application Part) previously referenced. The Radio Protocols are the ones indicated as Application Protocols in the Radio Network Layer of fig.3. The NAS protocols are also indicated in fig.2.

With reference to the **fig.5,** the Transport Plane on the Uu interface is the same as described in the User Plane. It consists of Level 1 UTRA FDD or TDD mode and Level 2 protocols MAC and RLC. The Transport Plane on the Iub, Iur and Iu interfaces again consists of the same Level 1 as described in the User Plane. ATM and AAL2-5 are used as Layer 2 signalling protocols, in particular by the **ALCAP.**

The indicated Radio Protocols are the following: RRC (Radio Resource Protocol), NBAP (Node B Application Part), RNSAP (Radio Network Subsystem Application Part), **RANAP** (Radio Access Network Application Part). RRC is used as Layer 3 protocol for control information transfer between the UE and UTRAN. RRC message carry all information required to set-up, modify, or release Radio Links (RL), which carry in their payload higher layer NAS signalling and enable UE mobility in RRC Connected mode. NBAP is used as Layer 3 protocol on the Iub interface. It carries common signalling or dedicated signalling between RNC and Node Bs. RNSAP is used as Layer 3 protocol on the Iur interface. It supports basic inter-RNC mobility and DCH traffic, as well as CCH traffic transmission. RANAP is used as Layer 3 protocol on the Iu interface. It is used for signalling between UTRAN and the Core network CN. RANAP is responsible on Iu for e.g.: Paging, RAB (RAdio Bearer) management, S-RNC relocation, security and overload control, and the NAS signalling transfer.

The indicated NAS Protocols are the following: MM (Mobility Management), GMM (GPRS MM), SM (Session Management), and CM (Connection Management). MM supports function such as: UE attach / detach, security functions, and location/routing area updates. SM supports Packet Data Protocol (PDP) context activation / de-activation for PS connections. CM is used for Circuit Switched Call Control, Supplementary Services, and SMS support. Besides RANAP and RRC contain Direct Transfer procedures for transparent NAS message transfer between UEs and the Core Network CN.

### APPROACH TO THE TECHNICAL PROBLEM

To approach the technical problem to be solved some basic concepts about the SS7 signalling and the relative definitions are given in the following. In accordance with the specifications, a telecommunication network served by a common channel signalling is composed of a number of switching and processing nodes interconnected by transmission links. To communicate using SS7, each of these nodes must act as a signalling point within the SS7 network. In addition, there will be a need to interconnect these signalling points by means of signalling data links, such that SS7 information may be conveyed between them. A number of parallel signalling links constitute a link-set. The combination of signalling points and their interconnecting signalling links form the SS7 signalling network. In specific cases there may be a need to partition the common channel signalling functions at such a node into logically separate entities from a signalling network point of view; i.e. a given physical node may be defined as more than one signalling points. All signalling points in a SS7 network are identified by a unique code known as a Point Code. The term "signalling mode" refers to the association between the path taken by a signalling message and the signalling relation to which the message refers, where "signalling relation" means that for the signalling points which are the origin and the destination of the message the possibility exists of communicating between their corresponding User Part function. The SS7 system is specified for use in the associated and quasi-associated modes. In the associated mode of signalling the messages relating to a particular signalling relation between two adjacent points are conveyed over a link-set directly interconnecting those signalling points. A signalling point at which a message is generated is the originating point of the message and the relative Point Code is an Originating Point Code (OPC). A signalling point to which a message is destined is the destination point of the message and the relative Point Code is a Destination Point Code (DPC). A signalling point at which a message is received on one signalling link and is transferred to another link is a Signal Transfer Point (STP) addressed by its relevant Point Code. A pre-determined path that a message takes through the various signalling points is the signalling route for that signalling relation. Address message is used to route the call to the appropriate called destination. A signalling message is an assembly of information, defined at level 3 or 4, pertaining to various signalling tasks, that is transferred as an entity by the message transfer function. Each message contains service *information* and *signalling information,* packed up into Message Signal Units (MSUs) which also includes control information related to the level 2 functions of the signalling link conveying the message. The service *information* including a Service Indicator Octet (SIO) identifying the source User Part (TUP, DUP, SCCP, MTP, Other type) and possibly additional information such as an indication whether the message relates to international or national application of the User Part. The *signalling information* of the message include the actual user information, such as one or more telephone or data call control signals, management and maintenance information, etc., and information identifying the type and format of the message. The *signalling information* of the message contains a standard label enabling the message to be routed towards its destination and then directed to the particular circuit, call, management or other transaction to which the message is related at the receiving User Part. In the standard Label the portion that is used for routing is called the *Routing Label,* it includes the OPC (14 bits), the DPC (14 bits), and a Signalling Link Selection (SLS) field (4 bits) used for load sharing. The standard routing label assumes that each signalling point in a signalling network is allocated a code according to a code plan that is unambiguous within is domain, either international or national in accordance with the Network Indicator (NI) code of the SIO field. Having sufficiently clarified the general addressing part of a SS7 signalling message, it is now consequent to shortly examine the signalling message handling. For this aim the following functions are introduced: *Message routing, Message distribution,* and *Message discrimination. Message routing* is the process of selecting, for each signalling message to be sent, the signalling link to be used. Message routing is based on analysis of the *routing label* of the message in combination with predetermined routing data at the signalling point concerned. Message routing is Destination Point Code dependent. In the SS7 system message routing is made in a manner by which the message route taken by a message with a particular *routing label* is predetermined and, at a given point in time, fixed. *Message distribution* is the process which, upon receipt of a message at its destination point, determines to which User Part of level 3 function the message is to be delivered. This choice is made on analysis of the service indicator field. *Message discrimination* is the process which, upon receipt of a message at its destination point, determines whether or not the point is the destination point of the message. If yes, the message is delivered to the message distribution function; if it is not, and the signalling point has the transfer capability, the message is delivered to the routing function for further transfer on a signalling link.

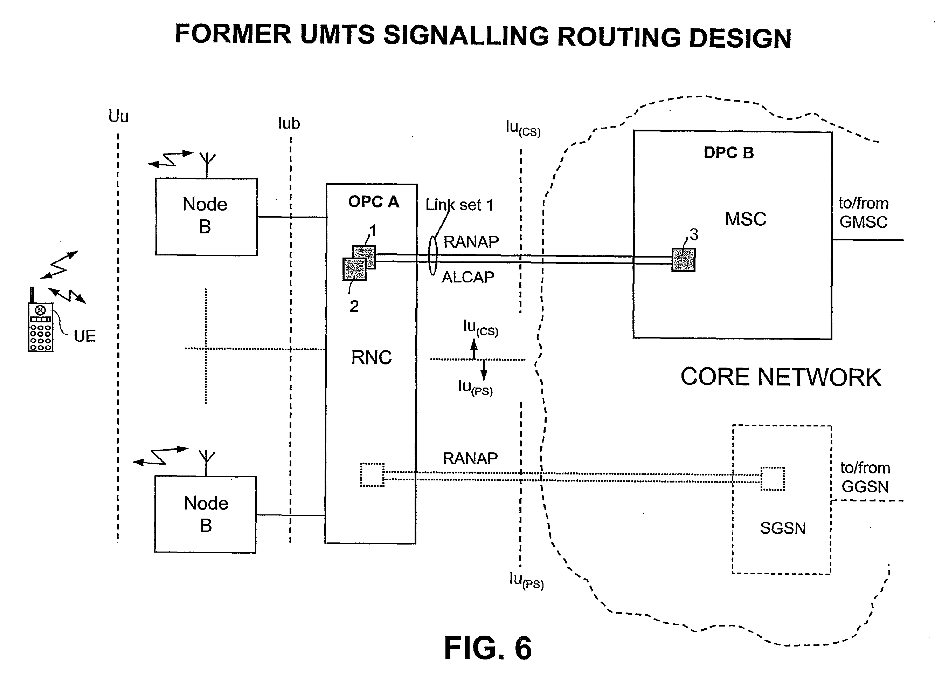

The implementation of the UMTS network of **fig.1,** that will be put into service both in Germany and in Italy between short-term, has been committed to a consortium of manufacturers including the Applicant. An unique provider is entrusted. The Applicant was autonomously engaged designing an UMTS network like the one of **fig.1,** simplified in the scheme of **fig.6** in which the only circuit switching part is pointed out. With reference to **fig.6** a RNC controller connected to a MSC through a Link set 1 is visible. The link set 1 carries both the signalling generated by the Radio Control Plane Protocol (RANAP) and the Transport Control Plane Protocol (ALCAP). The network element RNC was assigned to an Originating Signalling Point associated to a respective Originating Point Code OPC A. The network element MSC was assigned to a Destination Signalling Point associated to a respective Destination Point Code DPC B. Two processing elements 1 and 2, corresponding to the activation processes of the RANAP and ALCAP protocols, are connected to the end of the Link set 1 inside the RNC. One processing element 3, corresponding to the termination processes of the RANAP and ALCAP protocols, is connected at the end of the Link set 1 inside the MSC.

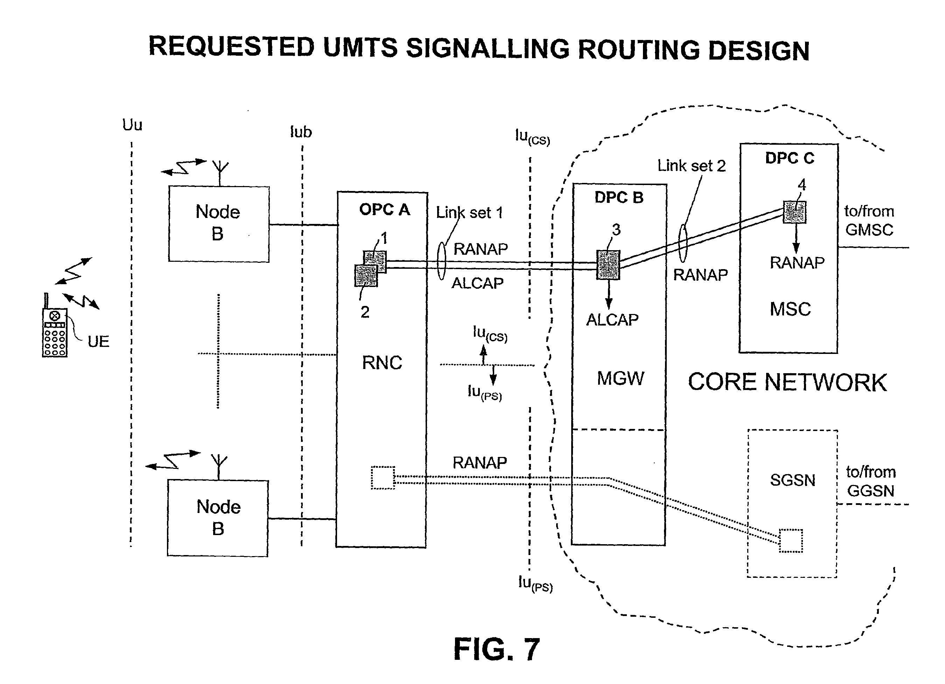

Recently said unique provider asked to the Applicant for the opportunity to manage a duple Destination Signalling Point into the Core Network. The aim was that to separate the Radio Control Plane traffic generated by messages of the RANAP application protocol, from traffic of the Transport Control Plane generated by messages of the ALCAP application protocol. **Fig.7** shows the requested solution sketched by including a media gateway MGW in the Core Network, connected to the MSC through a Link set 2 which is the prosecution of the Link set 1. The use of a front-end media gateway inside the Core Network is a feature known before the UMTS. A media gateway was also implicit in the previous design of fig.6. The part outside the Core Network being the same as in fig.6. In the Core network a first Destination Signalling Point, marked with DPC B, is assigned to the gateway MGW and a second Destination Signalling Point, marked with DPC C, is assigned to the MSC. Both the RANAP and ALCAP protocols come together to the Destination Signalling Point associated to the code DPC B, then the ALCAP protocol is terminated into the MGW gateway, while the routing function goes on the RANAP protocol towards the MSC's Destination Signalling Point associated to the DPC C code, where RANAP is terminated. In the original design of the Applicant a duple Destination Signalling Point for RANAP and ALCAP protocols was not foreseen, but only one assigned to the MSC. The assignment of a duple DPC to a network element is plenty compatible with the 3GPP standards. This task, starting from a system designed for an unique DPC (as the one of fig.6), involves a revision of a considerable number of microprocessor programs and the introduction of new ones. The provider's request has been posed short-time before the deadline for releasing the apparatuses and, considering that a longer time would be needed for reworking, the request should be let unsatisfied. On the other hand, to be lacking in satisfying in due time the provider requests could have had negative repercussions inside the consortium, for example, the loss of a considerable quota market of its own apparatuses.

### OBJECTS OF THE INVENTION

The main object of the present invention is that to provide a virtual duple Destination Point Code DPC inside the Core Network for diversely routing the RANAP and ALCAP protocols, without a great deal of software remake of a design implementing a single DPC, in order to respect this requirement put just before the deadline to release the apparatuses.

### SUMMARY AND ADVANTAGES OF THE INVENTION

To achieve said objects the subject of the present invention is a method for routing protocol signalling messages between signalling points associated to the elements of a mobile radio network, as disclosed in claim 1.

From the claim 1, it can be appreciated that the request to have a Core Network including a media gateway placed front-end the MSC for the aim of splitting and diversely route the RANAP and ALCAP messages, is satisfied by exploiting in a novel way means already existing in the signalling messages, precisely the Service Indicator Octet (SIO). As known, the SIO octet includes the following 4-bits fields: the Sub-service field, and the Service indicator field. The invention in subject makes use of the 4-bits Service indicator field for routing purpose. Normally the Service indicator code of the SIO octet is not entrusted by routing functions but for the only message distributions to the several User Parts, **once** the message is correctly delivered to the Destination Signalling Point addressed by the DPC code. The unique opportunity for routing on the SIO octet is the 2-bits Network Indicator of the 4-bits Sub-service field. The Network indicator NI provides for discrimination between international and national messages, out of this task the routing through NI is ineffective. A well clean and substantial difference exists between the routing using DPC codes and the routing using the SIO field, namely, in the first case a national or international planning of the several OPCs and DPCs is needed, while in the second case the only assignment of the User Parts to the 4-bits Service indicator code is needed (as in the message distribution). The DPC planning of above shall keep account the overall network configuration, the number and type of link or link set to be provided at the various interfaces, the tasks of the involved protocols, etc. Contrarily, the message distribution doesn't impact this planning at all. Obviously the proposed solution doesn't claim to replace in all respects the routing based on the OPCs and DPCs, but in a certain limited extent in which the protocol messages by different User Parts are also directed to well identifiable network elements, such as the MGW and MSC ones, the message distribution functions of the SIO octet can be used to place a virtual Destination Signalling Point in the splitting point (MGW). In these cases a noticeable simplification is possible. That is, a smart solution for satisfying the supplementary routing requests is provided.

### BRIEF DESCRIPTION OF THE DRAWINGS

The features of the present invention which are considered to be novel are set forth with particularity in the appended claims. The invention, together with further objects and advantages thereof, may be understood with reference to the following detailed description of an embodiment thereof taken in conjunction with the accompanying drawings given for purely non-limiting explanatory purposes and wherein:
- **fig.1** (already described) shows an UMTS system of the known art;
- **fig.2** (already described) shows a general protocol architecture of the UMTS system of fig.1;
- **fig.3** (already described) shows a general protocol model of the UTRAN interface belonging to the architecture of fig.2;
- **fig.4** (already described) shows a Circuit Switched User Plane of the UMTS system of fig.1;
- **fig.5** (already described) shows a Circuit Switched and Packet Switched Control Plane of the UMTS system of fig.1;
- **fig.6** (already described) shows a former UMTS signalling routing design;
- **fig.7** (already described) shows a requested UMTS signalling routing design;
- **fig.8** shows the UMTS signalling routing design proposed by the invention.;

### DETAILED DESCRIPTION OF AN EMBODIMENT OF THE INVENTION

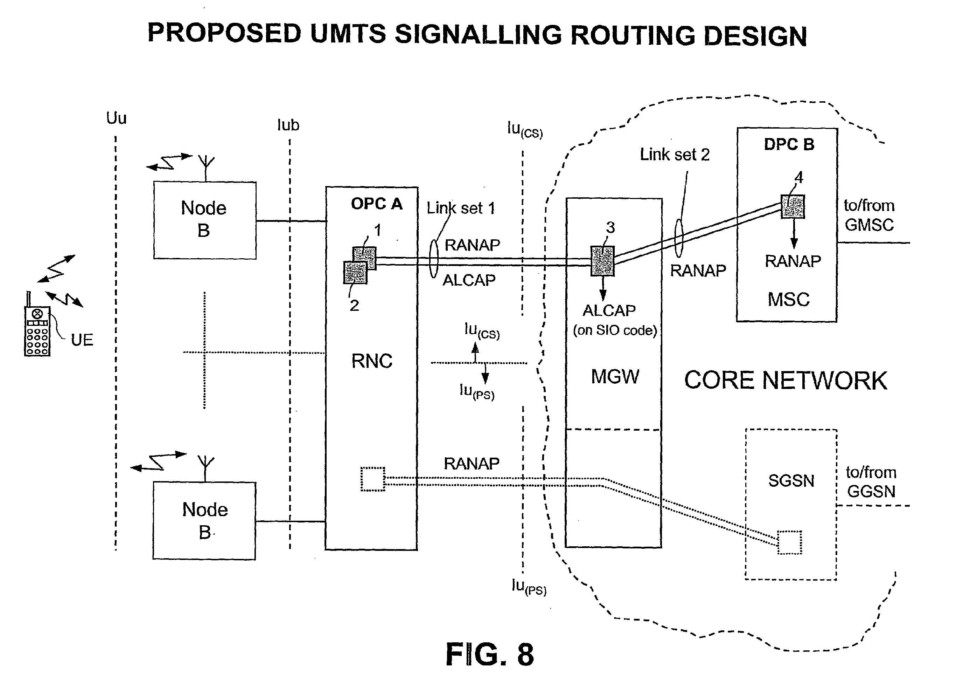

**Fig.8** shows a general diagram of an UMTS system like the one of fig.1, where a simplification of the only Circuit Switched part is performed to the aim of outlining the relevant signalling routing. With reference to **fig.8** the depicted mobile radio network consists of an User Equipment UE (the one dealing with the considered signalling messages) connected to a Node B through the on-air Uu interface. Node Bs are connected to a RNC controller through the Iub interface. The RNC controller is connected to a media gateway MGW belonging to the Core Network by means of a Link set 1. The media gateway MGW is also connected to the MSC by means of a Link set 2. The network element RNC is assigned to an Originating Signalling Point associated to a respective Originating Point Code OPC A. The network element MSC is assigned to a Destination Signalling Point associated to a respective Destination Point Code DPC B. The assignment of the various OPCs and DPCs is prevalently an off-line operation consequent to the planning of the OPCs and DPCs into the overall network. The UMTS of **fig.8**, as far as concerns the circuit switching operation (packet switching is presently not considered) is based on several signalling protocols already summarised in the introduction. In particular, the link set 1 carries both the Control Plane signalling generated by (fig.3) the Radio Network (RANAP) and the Transport Network (ALCAP). Two elements 1 and 2, corresponding to the activation processes of the RANAP and ALCAP protocols, are connected to the end of the Link set 1 inside the RNC. One element 3, corresponding to the terminating processes of the only ALCAP protocol, is connected to the other end of Link set 1 inside the media gateway MGW. The element 3 is also connected to a first end of the Link set 2, that prosecutes Link set 1 inside the Core Network. The second end of the Link set 2 is connected to an element 4 inside the MSC, corresponding to the termination processes of the only RANAP protocol. Without limitations, the element 1, 2, 3, and 4 are microprocessors or other equivalent VLSI devices. Each of the Link set 1 and 2 includes several individual links put in parallel. The Signalling Link Selection (SLS) 4-bits code is used for load sharing among the parallel links. Data streams on these Link set have the ATM format.

In operation, the RANAP and ALCAP protocol messages are generated into the RNC and transferred to the elements 1 and 2, respectively. Both the message include the same Originating Point Code OPC A and the same Destination Point Code DPC B. The RNC (possibly by the processing element 1) writes a code corresponding to the SCCP User Part In the Service indicator field of the Service Indicator Octet (SIO) of each message belonging to the RANAP protocol. The RNC (possibly by the processing element 2) writes a code corresponding to the ATM Adaptation Layer 2/3 (AAL2 / AAL3) In the Service indicator field of the Service Indicator Octet (SIO) of each message belonging to the ALCAP protocol disclosed in the ITU-T Q.2150.1. The two type of messages are put on Link set 1 and prosecute toward the gateway MGW inside the Core Network. The processing element 3 receives the incoming signalling messages, decodes the relevant OPC, DPC and SIO fields, and routes the messages accordingly. In particular, when the combination of the routing label code and the SIO code is the one corresponding to OPC A AND DPC B AND a Service indicator code indicating ATM Adaptation Layer AAL2/3 User Part, the processing element 3 routes the incoming message to an ALCAP processor locally to the media gateway MGW. Instead, when the combination is OPC A AND DPC B AND a Service indicator code indicating the SCCP User Part, the processing element 3 routes the incoming message towards the MSC. The processing element 4 receives the incoming messages, decodes the relevant OPC, DPC and SIO fields, and routes the received messages accordingly towards a RANAP processor locally to the MSC. The Network Indicator NI field of the SIO octet of the two type of messages is written by the relevant processing elements in accordance with their national or international nature.

## Claims

1. Method for routing signalling messages (RANAP, ALCAP) from an originating signalling point associated to a radio network controller (RNC) to one or more destination signalling points associated to relevant core network elements (MGW, MSC), each message including an originating point code field (OPC A) for indicating the message originating signalling point, a destination point code field (DPC B) for indicating the message destination signalling point, and a service information code field (SIO) for distributing the message to an addressed user part, **characterised in that** includes the step of:
a) writing, by the radio network controller (RNC), a destination point code (DPC B) into the relevant field of first-type messages belonging to a protocol of a Radio Access Network Application Part (RANAP), and into the relevant field of second-type messages belonging to a protocol of an Access Link Control Application Part (ALCAP), the common destination point code (DPC B) indicating a destination signalling point assigned to a message switching centre (MSC);
b) writing, by the radio network controller (RNC), the selection code of a first user part into the service information field (SIO) of the first-type messages (RANAP), and the selection code of a second user part into the service information field (SIO) of the second-type messages (ALCAP);
c) conveying the first-type and the second-type messages (RANAP, ALCAP) on a signalling link (Link set 1) connecting the radio network controller (RNC) to a media gateway (MGW) inside the core network;
d) decoding the messages of the two protocols (RANAP, ALCAP) by the media gateway (MGW) and routing the first-type messages (RANAP) to the first user part in the message switching centre (MSC) and the second-type messages (ALCAP) to the second user part in the media gateway, on the basis of said selection code.

2. Method for routing signalling messages according to claim 1, **characterised in that** the first-type messages (RANAP) routed at step d) are forwarded on a second signalling link (Link set 2) connecting the media gateway (MGW) to the message switching centre (MSC).

3. Method for routing signalling messages according to claim 1 or 2, **characterised in that** in the decoding step d) the originating point code (OPC A), the destination point code (DPC B), and the service information code (SIO) are put in logical AND in order to obtain the routing direction.

4. Method for routing signalling messages according to one of the preceding claims, **characterised in that** the first user part is the Signalling Connection Control Part disclosed in the relevant ITU-T standards, and the second user part is the ATM Adaptation Layer AAL2 / 3 disclosed in the relevant 3GPP Technical Specifications.

5. Method for routing signalling messages according to one of the preceding claims, **characterised in that** the first-type and the second-type messages include a signalling information field in which are coded: the actual user information, such as one or more telephone or data call control signals, management and maintenance information, and information identifying the type and format of the message.

6. Method for routing signalling messages according to one of the preceding claims, **characterised in that** the first-type and the second-type messages include a signalling information field which provides for discrimination between international and national messages.
